Europäisches Patentamt

(19) European Patent Office

Office européen des brevets

(11) Publication number:

**0 176 167**

**A1**

(12) **EUROPEAN PATENT APPLICATION**

(21) Application number: 85303012.0

(22) Date of filing: 29.04.85

(51) Int. Cl.⁴: **B 23 P 23/00**
**B 25 F 1/02**

(30) Priority: 21.09.84 US 653514

(43) Date of publication of application:
02.04.86 Bulletin 86/14

(84) Designated Contracting States:
AT BE CH DE FR GB IT LI LU NL SE

(71) Applicant: B P S Inc.
2646 Massachusetts Avenue
Cambridge Massachusetts 02140(US)

(72) Inventor: Cote, Fernand
68 Fairview Drive Madison
Connecticut 06443(US)

(74) Representative: Archer, Philip Bruce et al,
Urquhart-Dykes & Lord Trinity Court Trinity Street
Priestgate
Peterborough Cambridgeshire PE1 1DA(GB)

(54) Portable metal fabricating apparatus.

㉗ Portable metal fabricating apparatus having a number of tool sets to perform different operations including bending, shearing and punching is provided. A hydraulic cyclinder (30) is mounted to a base (16) and has a ram (34) which moves in a rectilinear path toward and away from the base (16). A pair of tool support members (12, 14) are mounted in a transversely spaced apart relationship to each other at opposite sides of the path and are releasably attached to the base (16). One of the tools of a tool set is releasably connected to the tool support members in the path and another of the tools of the tool set is releasably secured to the ram (34) to move with the ram into working relationship with a workpiece positioned between the tools. A protractor (66) is provided for continually indicating the bending angle of a workpiece during the bending work cycle.

FIG. I

EP 0 176 167 A1

Croydon Printing Company Ltd

## PORTABLE METAL FABRICATING APPARATUS

The present invention relates generally to metal fabricating and deals more particularly with a portable, multi-function metal fabricating apparatus for performing a number of different operations on a workpiece such as an elongated heavy metal plate of the type used in making an electrical bus bar.

Bus bar distribution systems are generally constructed of heavy copper or aluminum plates and carry large amounts of electrical current to supply electrical power to desired locations. The plates generally require bending, punching and shearing to form assembly units wherein a plurality of such units may be conveniently and firmly interconnected to form a bus bar distribution system.

The formation of the assembly units into the desired sizes and shapes is generally accomplished through the use of several independent, large, single function and generally stationary metal fabricating apparatus. It is generally impractical to move such apparatus between job site locations so that the bus bar assembly units are required to be fabricated at a location remote from the location where the bus bar system is being installed. Even in those instances where the apparatus is transported to the on-site location, it is necessary to carry the heavy plates between a work area where the units are assembled and the area where the heavy fabricating apparatus is located. Consequently, the fabrication of the bus bar assembly units can not . generally be accomplished at the assembly area as needed.

The interconnection of bus bar assembly units is generally made by fastening a splice plate to abutting ends of the assembly to form a butt joint. Holes are generally drilled in the splice plate and bus bar assembly units in a desired hole pattern using a drillpress. The drill points are generally located by some sort of a template and hole placement can vary between units and plates. Consequetly, holes may not be properly aligned to permit the fastening together by an associated fastening means, such as, for example, a nut and bolt.

Another problem affecting hole registry is drill drift that often occurs during the drilling process. One method used to overcome the hole registry problem is to make the holes larger than the associated fastening means. Even when larger holes are drilled, it is often necessary to further increase the size of one or more holes to achieve hole registry to permit bolt insertion through all the holes comprising the hole pattern to join a splice plate and bus bar assembly unit. It is often necessary to form one or more angles in a bus bar plate to accommodate turns and the like when the assembly units are interconnected. A problem often associated with bus bars bent with prior art bending devices is that the bus bar develops cracks or fractures at the bending point. Such defects are unacceptable because they contibute to "hot spots" due to the generally heavy electrical current flowing through the bus bar. Additionally, it is diffi-cult to accurately control the angle of a bend and generally, a single bending tool cannot be used to form different angles.

We have identified a requirement to provide a compact and light weight multi-function metal fabricating apparatus that is easily transported to a work area to shear, bend and punch holes in elongated heavy metal plates that are generally used to form bus bar assembly units.

We have identified a requirement to provide apparatus of the foregoing type that converts to any one of the shearing, bending and punching operations with a minimum of time and effort.

A further requirement which we have identified is to provide apparatus of the foregoing type that easily and accurately bends heavy metal plates to a desired angle without causing cracks or fractures at the bending point.

An object of the invention is to provide apparatus and a method of operating same offering improvements in relation to one or more of the above requirements or generally.

The invention resides in a portable, metal fabricating apparatus for performing a number of different metal fabricating operations using a number of different sets of tools. The apparatus comprises a base and a movable part supported for reciprocal movement relative to the base along a rectilinear path toward and away from the base. A pair of tool support members are mounted in a fixed position relative to the base and in a transversely spaced apart relationship to each other and at opposite sides of the path and at least one of the tool support members is releasably attached in a fixed position relative to the base. One of the tools of a tool set is releasably connected to the support members in the path and in a spaced relationship with the base. Another of the tools of the tool set is releasably secured to the movable part to move with the part into working relationship with a workpiece positioned between the tools of the tool set. Power operated means move the movable part along the path.

The invention further resides in one of the tool sets having means for continually indicating the condition of a workpiece during the bending work cycle.

In the accompanying drawings of an embodiment :-

Fig. 1 is a side elevational schematic view of apparatus embodying the present invention wherein the set of tools illustrated is a bending tool.

Fig. 2 is a plan view of the apparatus of Fig. 1.

Fig. 3 is a sectional view taken along the line 3-3 in Fig. 1 showing the V block of the bending tool set in a retracted position toward the base.

Fig. 4 shows the apparatus of Fig. 3 with the V block of the bending tool set in working relationship with a pair of bending shoes and a workpiece placed therebetween.

Fig. 5 is a plan schematic view of apparatus embodying the present invention wherein the top frame plate is removed to show a shearing tool set.

Fig. 6 is a plan schematic view of apparatus embodying the present invention wherein the top frame plate is removed to show a punch tool set.

Fig. 7 is a plan schematic view of apparatus embodying the present invention wherein the top frame plate is removed to show a reverse-V bending tool set.

Figs. 8 a - c illustrate schematically the fabrication of a bus bar assembly unit having an offset requirement.

## DETAILED DESCRIPTION

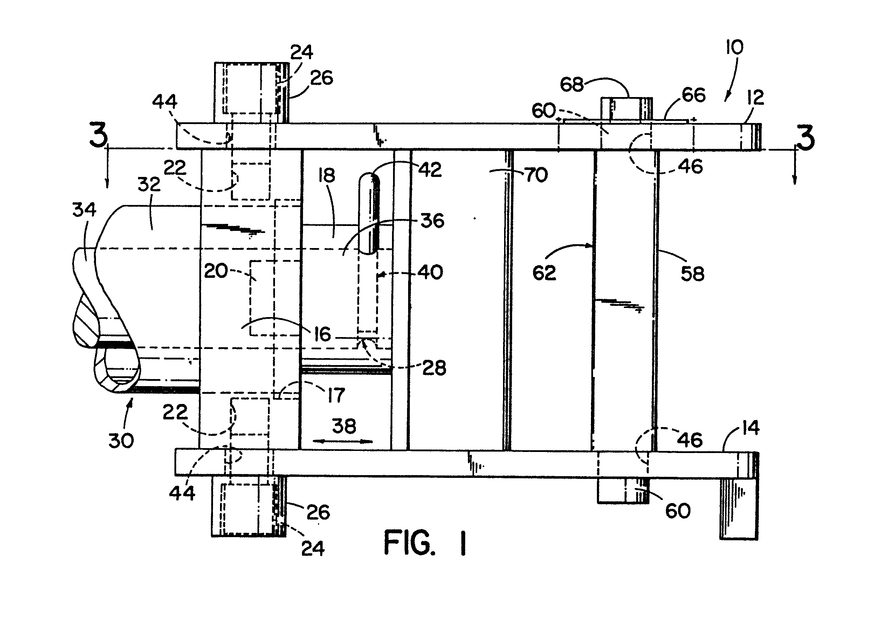

Now turning to the drawings and considering Fig. 1 in particular, a side elevational schematic view of a portable, metal fabricating apparatus embodying the present invention is shown therein and is designated generally by the numeral 10. Briefly, the apparatus 10 comprises a pair of tool support members or top and

0176167

bottom frame plates 12, 14 respectively, mounted in a fixed position relative to a base 16 and in a transversely spaced apart relationship to each other. A number of sets of tools are provided and each set performs a different metal fabricating operation such as, for example, bending, shearing and punching. One of the tools of a tool set is releasably connected between the frame plates 12, 14 and in a spaced relationship with the base 16. A power operated means has a movable part supported for reciprocal movement relative to the base 16 along a rectilinear path in one and an opposite direction toward and away from the base as indicated by the direction arrow 38. Another of the tools of the tool set is releasably connected to the movable part to move with the part into working relationship with a workpiece positioned between the tools.

Still referring to Fig. 1, the base 16 has a tapped central opening 17 extending through the base in the direction of the path and is adapted to mount a fluid motor or hydraulic cylinder 30. The cylinder 30 is comprised of a fixed part 32 and a movable part or ram 34. In the illustrated example, the fixed part 32 is threaded and is screwed into the tapped central opening 17 of the base 16. The cylinder 30 extends lengthwise away from the base 16 and the ram 34 extends through the base and moves axially along the rectilinear path.

A ram mounting means or adaptor 36 is used for releasably connecting the movable tool part of a tool set to the ram 34 and moves with the ram and the tool. The adaptor 36 is attached to the ram 34 by a threaded shank 20 which is screwed into a threaded opening in the end of the ram.

The adaptor 36 has a cylindrical shaped front portion which slideably fits into a mating cavity in the back 18 of a movable tool part. A movable tool part is secured to the adaptor 36 and held in place by a pin 42. The adaptor 36 has a semi-circular groove 28 around its circumference which complements semi-circular grooves in the back of a movable tool part to form a slot 40 into which the pin 42 is inserted, with half the pin in the adaptor and half in the tool back. The pin 42 of the illustrated embodiment is U-shaped for user convenience however, straight pins could also be used.

Screws 24, 24 are screwed into holes 22, 22 in the base 16 to releasably attach the top and bottom frame plates 12, 14 respectively to the base. A shoulder collar or bushing 26, 26 increases the surface area contact of the screws 24, 24 with the surface of the frame plates 12, 14. In another embodiment a spring hitch pin is inserted through a hole in a shank protruding from the base 16 through the frame plate to hold the plate in fixed position relative to the base. In the illustrated embodiment, both frame plates are shown to be in releasable attachment to the base 16 however, only one of the plates requires releasable attachment in order to mount and remove the tools in a tool set to and from the apparatus as will become readily apparent from the discussion below.

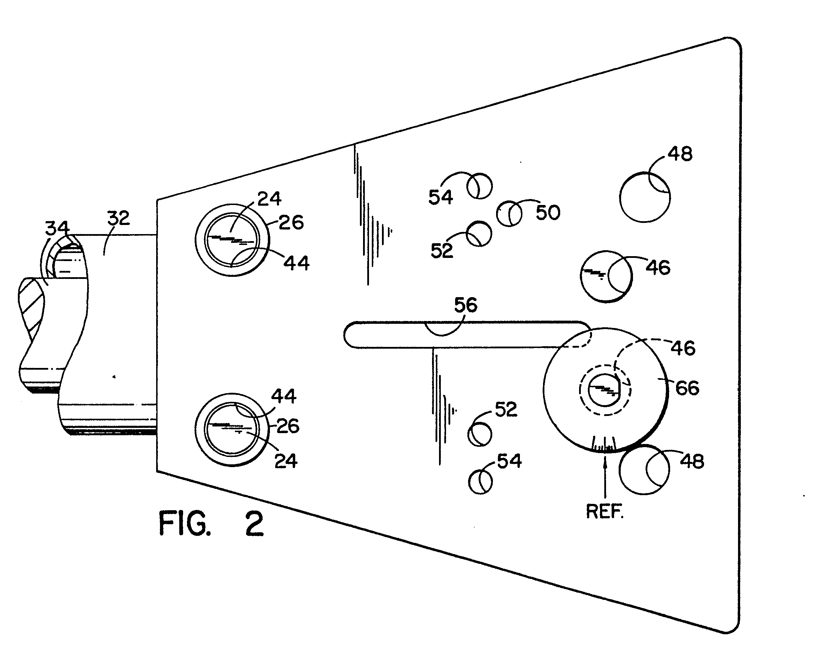

Referring now to Figs. 1 and 2, a plan view of the apparatus 10 of Fig. 1 is shown in Fig. 2. The top and bottom frame plates 12, 14 respectively are substantially identical and have a number of openings or holes which are in registry. Openings 44, 44 are used to attach the top and bottom frame plates 12, 14 respectively to the base 16. The openings 44, 44 of each frame plate lie along a line generally perpendicular to the path of the movable part and lie on either side of the path. Other openings 46, 46 and 48, 48 provide a releasable connection for one of the tools of a tool set. The openings 46, 46 are in a transversely spaced apart relationship at opposite sides of the path and lie on a line generally perpendicular to the path and at a fixed distance relative to the base 16. Openings 48, 48 are also transversely spaced apart relative to each other and at opposite sides of the path and lie on a line generally perpendicular to the path and at a different spaced relationship from the base 16.

A shear post opening 50 accommodates a shear post which is inserted into the opening and extends through the top and bottom frame plates 12, 14 respectively to hold and position a workpiece during the shearing operation. The function of the shearing post will become apparent during the discussion of the shearing tool set below.

Stripper post openings 52, 52 and 54, 54 for four and six inch thick metal plates respectively accommodate stripper posts which are inserted into the openings and extend through the top and bottom frame plates 12, 14 for stripping the metal plate from the punching tool during the punching operation as explained during the discussion of the punch tool set below.

A guide slot 56 extends generally outward from the base 16 along the path for guiding another of the tools in a tool set which moves with the ram 34 toward and away from the base.

The frame plates 12, 14 and the base 16 can be made of any number of different materials however, it is preferable to use one-half inch aluminum plate for the frames because of its light weight and strength. The base 16 is preferably of a material such as cold roll steel.

Considering now the sets of tools used to perform the different metal fabrictating operations, each tool of each tool set includes at least one dowel protruding from opposite ends of the tool and in a direction generally perpendicular to the path for releasable connection to the top and bottom frame plates 12, 14 respectively.

Turning first to the tool set used in the bending operation and referring to Figs. 1, 2, 3 and 4, one tool of the bending tool set is comprised of a pair of bending shoes 58, 58. Each shoe 58 has a dowel 60 protruding axially from each end for insertion into openings 46, 46 and are positioned in a transversely spaced apart relationship at opposite sides of the path. The bending shoes 58, 58 have a metal bending surface 62 facing toward the base 16 and against which a workpiece 64 is positioned for bending. At least one of the bending shoes 58, 58 has a protractor 66 for continually indicating the condition or bending angle of the workpiece 64 during the bending work cycle. The protractor 66 is adapted to fit on the dowel 60 extending through the top frame plate 12 so as to be easily viewable by a user. In the illustration shown, an upper part 68 of dowel 60 extending through the top frame plate 12 is formed into a D shape. The protractor 66 has a central opening also in a D shape which fits around the upper part 68 to engage the protractor and the bending shoe 58. The protractor rotates with the bending shoe 58 during the work cycle to provide an accurate and continual indication of the bending angle as a V block tool 70 is advanced along the path away from the base 16 into complementary engagement with the bending shoes and a workpiece 64 positioned therebetween.

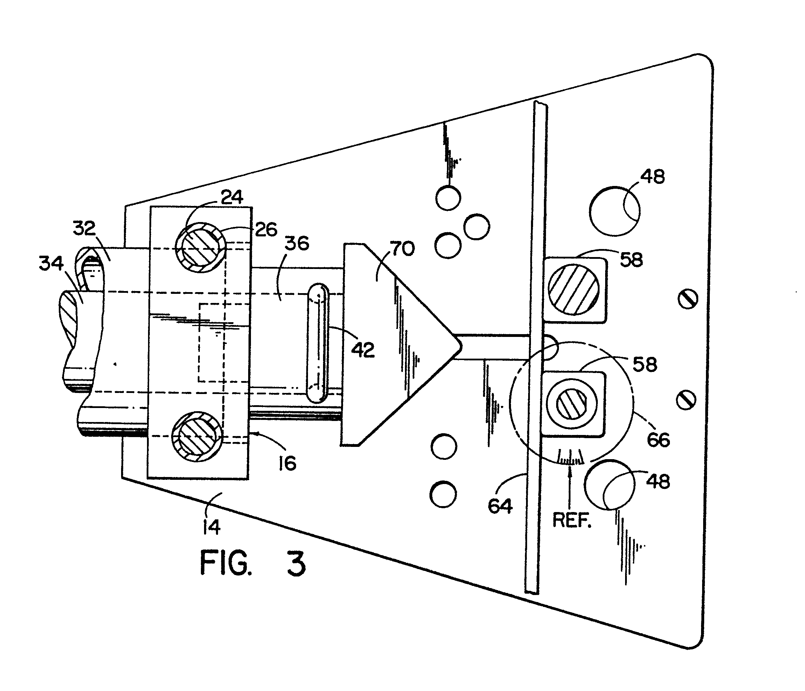

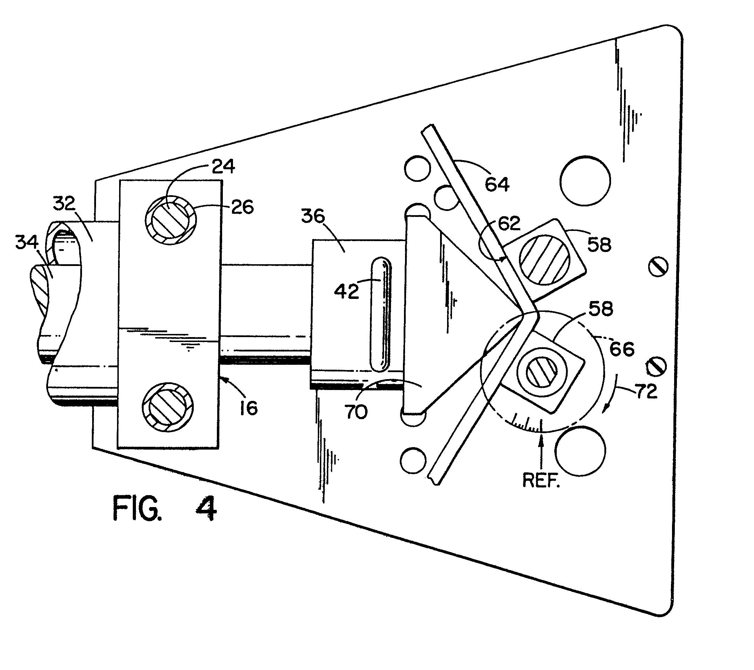

Considering Figs. 3 and 4, the protractor 66 rotates from a starting or reference point designated REF in the direction of arrow 72 when the bending V 70 is advanced along the path into working relationship with the workpiece 64 placed between the bending V and the bending shoes. The protractor 66 is calibrated in degrees and its rotation is directly proportional to angle bent in the workpiece. Continual indicating is provided for angles between 0 and 90 degrees. Consequently, the user can start. and stop the advancement of the bending V 70 by intermittently increasing fluid pressure in the hydraulic cylinder 30 to incrementally increase the bending angle as the desired angle magnitude is approached without worry of overbending or underbending the workpiece.

Because the bending shoes 58, 58 rotate as a workpiece is bent, the workpiece surface adjacent to the metal bending surface 62 does not scrape or rub the bending surface during bending and a bend can be made without marring or scratching the workpiece surface.

In addition, because the bending V 70 is advanced to apply gradually increasing force at the bending point rather than impact force to bend a workpiece, metal fatigue, cracks or other stresses which tend to cause the metal to fracture at the bend point are eliminated.

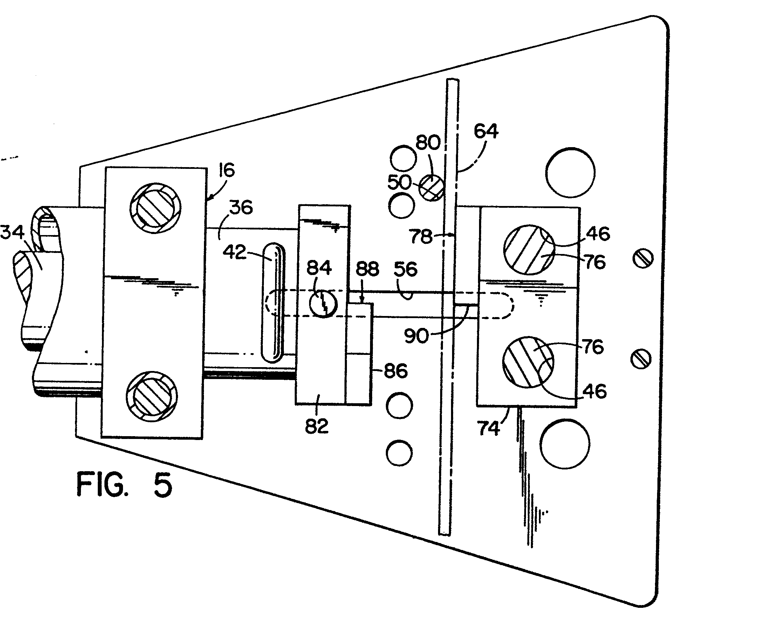

Turning now to Fig. 5, a plan schematic view of apparatus 10 is shown where in the set of tools illustrated performs a shearing operation. One of the tools 74 of the shearing tool set has dowels 76, 76 protruding from each end of the tool in a direction generally perpendicular to the path for releasable connection with holes 46, 46 in the top and bottom frame plates 12, 14 respectively. The tool 74 has a cutting face 78 against which a workpiece 64 is held by a shear post 80 which is inserted into opening 50 in the top and bottom frame plates 12, 14 respectively. Another of the tools 82 is connected to the ram adaptor 36 and is held in place by pin 42. The tool 82 has a guide dowel 84 which slideably moves in guide slot 56 as the tool moves toward and away from the base 16. The tool 82 has a cutting face 86 fits into complementary engagement with the tool 74. A workpiece 64 is sheared as the tool 82 advances away from the base 16 into working relationship with the workpiece 64 and the tool 74. The tool 82 has a cutting edge 88 which cooperates with a cutting edge 90 of tool 74 to shear the metal plate transversely to its length.

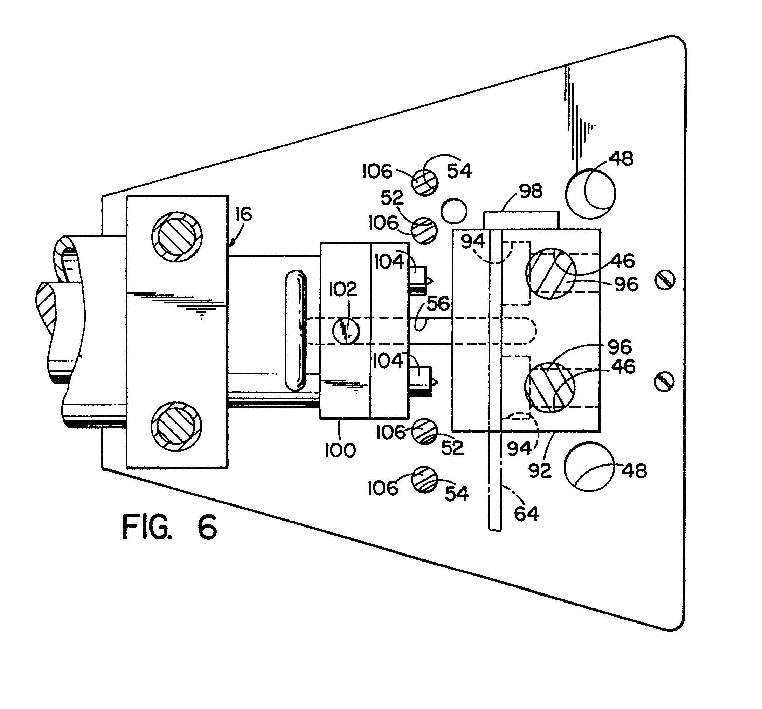

Referring now to Fig. 6 a plan schematic view of apparatus 10 embodying the present invention is shown wherein the tool set illustrated performs a punching opertion. One of the tools 92 holds a plurality of dies 94, 94 in a desired hole pattern to be punched in a workpiece 64. The tool 92 has dowels 96, 96 protruding from each end and in a direction generally perpendicular to the path for releasable connection with holes 46, 46 in the top and bottom frame plates 12, 14 respectively. The tool 92 has a stop plate 98 to position the workpiece 64 so that holes are punched in the workpiece at a desired distance from its end. Therefore, punched holes appear in the same place in each workpiece so that the final bus bar assembly units have substantially identical hole alignment. Another of the tools 100 of the punching tool set is connected to the ram adaptor 36 in a similar manner as described above. The tool 100 has a guide dowel 102 which slideably moves in the guide slot 56 as the tool moves toward and away from the base 16. The tool 100 has a number of punches 104, 104 equal in number to the number of dies 94, 94 in tool 92. The punches 104, 104 are arranged in the same hole pattern as the dies 94, 94 are arranged in tool 92.

The tool 100 is advanced with the ram 34 so that punches 104, 104 shear through workpiece 64 and move into the cavity of dies 94, 94. After the workpiece 64 is punched, the ram is reversed to withdraw the punches 104, 104 from the dies 94, 94 and the workpiece 64. Because of the tight fit of the punches 104, 104 in the workpiece 64, the workpiece remains stuck on the punches. As the tool 100 moves toward the base 16, the workpiece 64 is carried along until it comes in contact with stripper posts 106, 106 which force the workpiece off the punches 104, 104.

Stripper posts 106, 106 are inserted into stripper post openings 52, 52 when metal plates measuring one-quarter inch thick by four inches high are punched. Stripper posts 106, 106 are inserted into stripper post openings 54, 54 when holes are punched in one-quarter inch thick by six inches high metal plate. When six inch high metal plate is used, the punching tools 92 and 100 of the punching set are wider than the tools required to punch four inch metal plate and consequently cannot move

0176167

-14-

between stripper posts 106, 106 placed in openings 52, 52.

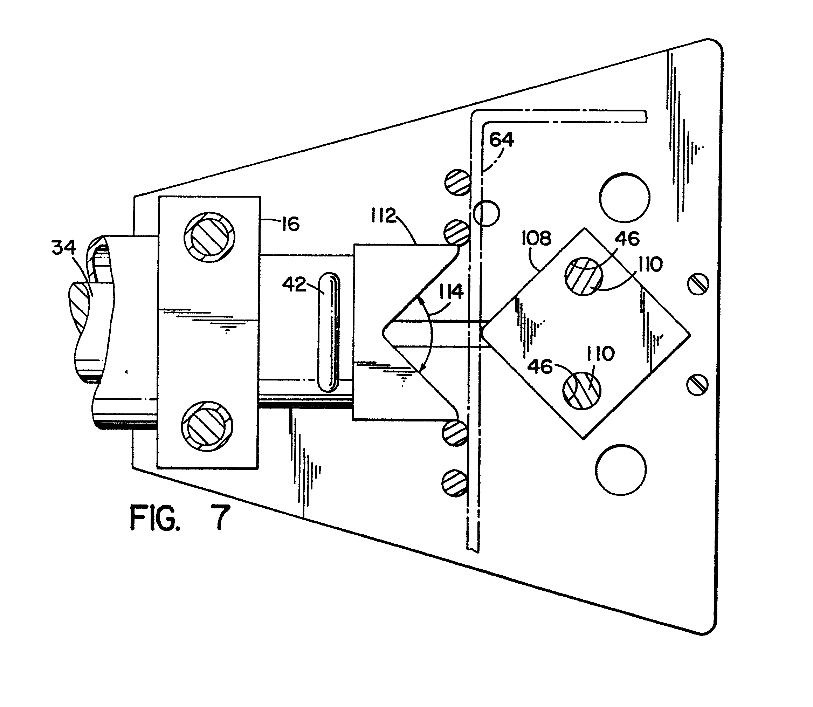

Turning now to Fig. 7, a plan schematic view of apparatus 10 embodying the present invention is shown wherein the tool set illustrated is a reverse V bending tool set for bending metal plates into U forms. The bending tool set illustrated in Figs. 1 - 4 is not practical when bending elongated metal plates into U forms because as the plate is bent, the arms that form bend into the apparatus when the second of the two required bends is attempted. Consequently, a reverse V bending tool bends an elongated metal plate in such a way that the arms formed by the metal plate bend in an outward direction extending generally away from the base 16 rather than into the apparatus 10.

One of the tools of the reverse V bending set is a bending block 108. Dowels 110, 110 protrude from each end of the block 108 in a direction generally perpendicular to the path for releasable connection with openings 46, 46 in the top and bottom frame plates 12, 14 respectively. Another of the tools 112 is a reverse V block and is connnected to the ram 34 as described above. The reverse V block 112 moves away from the base 16 into working relationship with the bending block 108 and a workpiece 64 placed therebetween to produce a 90 degree bend.

The reverse V block 112 has an angle designated generally at 114 equal to approximately 92 degrees to prevent cracking, fracturing or other stresses in the metal plate at the bending point.

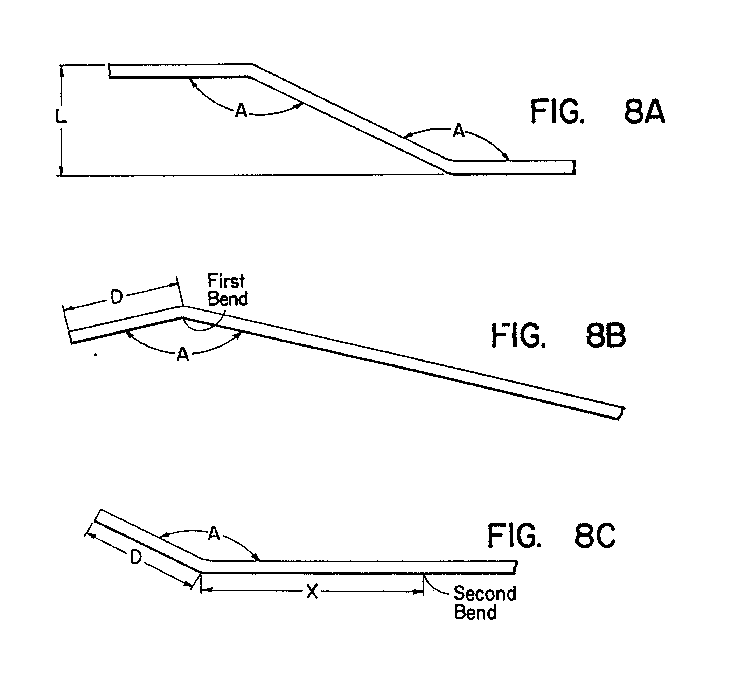

A feature of the apparatus embodying the present invention is the making of bus bar assembly units having an offset requirement. Referring to Figs. 8 a - c, an assembly unit having an offset requirement of length L and an angle A is shown in Fig. 8a. A metal plate is first bent to the desired offset angle A at the required distance D from one end of the plate as illustrated in Fig. 8b. The plate is then positioned so that the arm formed by the first bend faces away from the base. The second bend is made at a distance X from the first bend and is equal to twice the length L as illustrated in Fig. 8c for an offset angle A equal to 30 degrees. Other offset distances X will vary depending on the offset length desired. The plate is then bent to the desired offset angle A to make the desired offset bus bar assembly unit.

A portable, metal fabricating apparatus for performing a number of different metal fabricating operations on an elongated metal plate has been described in one preferred embodyment. It will be understood that numerous changes in modifications made be had without departing from the invention. Therefore the present invention has been described by way of illustration rather than limitation.

0176167

-16-

CLAIMS

1. Portable, metal fabricating apparatus characterized by:

a base (16);

a movable part (34) supported for reciprocal movement relative to said base (16) along a rectilinear path in one and an opposite direction respectively toward and away from said base;

a plurality of sets of tools, each set in said plurality being adapted to perform a different metal fabricating operation;

a pair of tool support members (12, 14) mounted in a fixed position relative to said base (16) and in transversely spaced apart relationship to each other and at opposite sides of said path, said members extending generally outward from said base in the direction of said path;

means (24, 24) for releasably attaching at least one of said tool support members (12, 14) in a fixed position relative to said base (16);

means for releasably connecting one of said tools in a tool set to said support members (12, 14) in said path and in spaced relationship to said base (16);

means (36) for releasably securing another of said tools in the tool set to said movable part (34) to move with said movable part and into working relationship with a workpiece positioned between said one and said another tools in response to movement of said movable part in said opposite direction, and

power operated means (30) for moving said movable part (34) along said path.

2. Portable, metal fabricating apparatus as defined in claim 1 further characterized in that said tool support members (12, 14) have a plurality of openings (44, 44, 46, 46, 48, 48,), said openings being in registry with one another when said tool support members are attached to said base (16).

3. Portable, metal fabricating apparatus as defined in claim 2 further characterized in that said connecting means comprises at least one dowel (60, 76, 96, 110) protruding axially from each of opposite ends of said one tool and in a direction generally perpendicular to said path, said connecting means further characterized in that certain of said openings in said tool support members (12, 14) whereby said one tool is connected in said path when said pair of tool support members (12, 14) are mounted to said base (16) and said one tool is releasable when one of said pair of tool support members is released from said base.

4. Portable, metal fabricating apparatus as defined in claim 3 further characterized in that one of the tool sets of said plurality is a bending tool set, said another tool of said bending set is a V shape block (70) and said one tool of said bending set is a pair of bending shoes (58, 58), each shoe including a dowel (60) protruding axially from each end and rotabably connected to said tool support members (12, 14) in transversely spaced apart relationship to each other and at opposite sides of said path, said shoes rotating axially when said V block is advanced along said path into complementary engagement with said shoes and the workpiece positioned therebetween.

5. Portable, metal fabricating apparatus as defined in claim 4 further characterized by means (66) coupled to at least one bending shoe (58) of said pair for continually indicating the bending angle of the workpiece during the work cycle.

6. Portable, metal fabricating apparatus as defined in claim 5 further characterized in that said indicating means (66) is a protractor.

7.	Portable, metal fabricating apparatus as defined in claim 1 further characterized in that said power operated means (30) comprises a fluid motor, said motor having a fixed part (32) mounted in a fixed position relative to said base (16) and including a ram (34) comprising said movable part extending through said base in the direction of said path for reciprocal movement relative to said base along said path, said motor (30) having means for stopping the ram movement at a desired position along said path.

8.	Portable, metal fabricating apparatus as defined in claim 3 further characterized in that one of the tool sets of said plurality is a punch set (92, 100) for punching a plurality of holes in a predetermined hole pattern in the workpiece.

9.	Portable, metal fabricating apparatus as defined in claim 3 further characterized in that one of the tool sets of said plurality is a shearing set (74, 82) for cutting an elongated workpiece transversely of its length.

10. Portable, metal fabricating apparatus as defined in claim 3 further characterized in that one of the tool sets of said plurality is a reverse bending set (108, 112) for bending an elongated workpiece into a U form, said another tool of reverse bending tool set is a reverse V shape block (112) and said one tool of said reverse bending tool set is a rectangular shaped block (108), said reverse V block is advanced along said path into complementary engagement with said rectangular block and the workpiece placed therebetween to bend the workpiece to a 90 degree angle, whereby the arms of the elongated workpiece bend in an outward direction extending generally away from said base.

11. Portable, metal fabricating apparatus characterized by:

a base (16);

a ram (34) supported for reciprocal movement relative to said base (16) along a rectilinear path in one and an opposite direction respectively toward and away from said base;

a fluid motor (30) having a fixed part (32) mounted in a fixed position relative to said base (16) and including a ram (34) extending through said base in the direction of said path;

a pair of tool support members (12, 14) mounted in a fixed position relative to said base (16) and in transversely spaced apart relationship to each other and at opposite sides of said path, said members (12, 14) extending generally outward from said base (16) in the direction of said path;

means (24, 24) for releasably attaching at least one of said tool support members (12, 14) in a fixed position relative to said base (16), and

a plurality of sets of tools, each set in said plurality performing a different metal fabricating operation, each set of said plurality including at least one tool releasably connected to said support members (12, 14) in said path and in spaced relationship to said base, another of said tools in the tool set releasably secured to said ram (34) to move with said ram and into working relationship with a workpiece positioned between said one and said another tools in response to movement of said ram in said opposite direction, said plurality of sets of tools including at least a bending set (58, 70), said one tool of said bending set being a pair of bending shoes (58, 58), each shoe being rotatably connected to said tool support members (12, 14) in transversely spaced apart relationship to each other and at opposite sides of said path, another tool of said bending set being a V block (70), and one of said bending shoes having a protractor (66) for continually indicating the bending angle of a workpiece during the bending work cycle.

FIG. 1

FIG. 2

FIG. 3

FIG. 4

FIG. 5

0176167

FIG. 6

FIG. 7

FIG. 8A

FIG. 8B

First
Bend

FIG. 8C

Second
Bend

0176167

**EUROPEAN SEARCH REPORT**

| Category | Citation of document with indication, where appropriate, of relevant passages | Relevant to claim | CLASSIFICATION OF THE APPLICATION (Int. Cl.4) |
|---|---|---|---|

## DOCUMENTS CONSIDERED TO BE RELEVANT — EP 85303012.0

| Category | Citation of document with indication, where appropriate, of relevant passages | Relevant to claim | CLASSIFICATION OF THE APPLICATION (Int. Cl.4) |
|---|---|---|---|
| Y | DE - B - 1 918 949 (FISCHER) <br> * Totality * | 1-4 | B 23 P 23/00 <br> B 25 F 1/02 |
| Y | GB - A - 2 067 948 (WOOD) <br> * Abstract; claims 1,6,7,9,12, 13; fig. * | 1-4 | |
| Y | FR - A - 1 405 779 (BLATT) <br> * Fig. 1-4 * | 1-4 | |
| A | FR - A1 - 2 382 283 (MERCIER et BORDIER) <br> * Fig. 4 * | 4 | |
| A | GB - A - 2 098 110 (CML COSTRUZIONI MECCHANICHE LIRI SRL) <br> * Fig. 1,3,4 * | 5,6 | **TECHNICAL FIELDS SEARCHED (Int. Cl.4)** <br> B 21 D 7/00 <br> B 23 P 23/00 |
| A | FR - A - 1 270 870 (FIBORA A.G.) <br> * Totality * | | B 25 B 1/00 <br> B 25 B 27/00 <br> B 25 B 28/00 |
| A | GB - A - 2 055 662 (MR PCN RI-CHARDSON) <br> * Totality * | | B 25 F 1/00 <br> B 25 F 3/00 |

The present search report has been drawn up for all claims

| Place of search | Date of completion of the search | Examiner |
|---|---|---|
| VIENNA | 18-12-1985 | TROJAN |